# EUROPÄISCHE PATENTANMELDUNG

(11) **EP 2 247 100 A1**
(43) Veröffentlichungstag der Anmeldung: **03.11.2010**
(21) Anmeldenummer: 10003909.8
(22) Anmeldetag: 13.04.2010
(51) Int. Cl.: H04N 5/335

(54) **Bildsensor**

(30) Priorität: 27.04.2009 DE 102009019034
(71) Anmelder: Arnold & Richter Cine Technik GmbH & Co. Betriebs KG, 80799 München (DE)
(72) Erfinder: Cieslinski, Michael, 85521 Ottobrunn (DE)
(74) Vertreter: Manitz, Finsterwald & Partner GbR

(57) **Zusammenfassung**

Die Erfindung betrifft einen Bildsensor, insbesondere einen CMOS-Bildsensor, mit einer Vielzahl von in Zeilen und Spalten angeordneten lichtempfindlichen Pixeln zur Erzeugung belichtungsproportionaler Ausgangssignale, wobei den Spalten Spaltenleitungen zugeordnet sind, um die Ausgangssignale zur Verstärkung wenigstens einem Spaltenverstärker zuzuführen, wobei der wenigstens eine Spaltenverstärker mit den Spaltenleitungen derart zusammenwirkt, dass die Verstärkung des jeweiligen Ausgangssignals von der Kapazität der jeweiligen Spaltenleitung abhängt.

## Beschreibung

Die vorliegende Erfindung einen Bildsensor, insbesondere einen CMOS-Bildsensor, insbesondere einen aktiven Pixelsensor (APS), mit einer Vielzahl von in Zeilen und Spalten angeordneten lichtempfindlichen Pixeln zur Erzeugung belichtungsproportionaler Ausgangssignale, bei welchen es sich insbesondere um Spannungssignale handelt, wobei den Spalten Spaltenleitungen zugeordnet sind, um die Ausgangssignale zur Verstärkung wenigstens einem Spaltenverstärker, der insbesondere als Spannungsverstärker ausgebildet ist, zuzuführen.

Bekannte elektronische Kameras verwenden häufig einen Bildsensor in CMOS-Technologie, der eine Vielzahl von in Zeilen und Spalten angeordneten Pixeln umfasst, die durch ein Objektiv der Kamera fallendes Licht in elektrische Ausgangssignale, insbesondere Spannungen, umwandeln, wobei eine jeweilige Spannung zu einer Ladung proportional ist, die durch Belichtung in dem jeweiligen Pixel erzeugt worden ist.

Eine Ausleseschaltung, die üblicherweise am Rand des durch die Pixel gebildeten Bildfelds des Bildsensors angeordnet ist, nimmt über Spaltenleitungen die Ausgangssignale der Pixel zur weiteren Verarbeitung entgegen. Bei der Verarbeitung werden die Ausgangssignale typischerweise gespeichert und verstärkt, wobei bei einer korrelierten Doppelabtastung (correlated double sampling) zur Rauschunterdrückung neben dem jeweiligen eigentlichen Ausgangssignal ein jeweiliges, einem ungeladenen Pixel entsprechendes Referenzsignal berücksichtigt wird und eine Differenzbildung zwischen dem Ausgangssignal und dem Referenzsignal erfolgt. Die verstärkten (Differenz-)Signale können dann von einem oder mehreren Ausgängen des Bildsensors analog ausgegeben oder durch einen oder mehrere Analog-Digital-Wandler digitalisiert und digital ausgegeben werden. Eine Differenzbildung kann aber auch erst nach der Analog-DigitalWandlung vorgenommen werden.

Die Pixel heutiger Bildsensoren besitzen nur noch eine sehr geringe Pixelgröße, so dass für eine hohe Lichtempfindlichkeit lediglich ein geringes Eigenrauschen des Bildsensors tolerierbar ist. Grundsätzlich kann das Signal/Rausch-Verhältnis der Ausgangssignale dadurch erheblich verbessert werden, dass bereits in die Pixel selbst ein jeweiliger Verstärker integriert wird, da dann alle nachfolgenden Rauschquellen nur noch auf die bereits verstärkten Ausgangssignale wirken können. Ein derartiger Verstärker benötigt jedoch zusätzlichen Platz, so dass der Anteil der lichtempfindlichen Fläche an der Gesamtfläche eines Pixels noch geringer wird. Daher ist es in der Regel nicht praktikabel, bereits in die Pixel selbst Verstärker zu integrieren.

Üblicherweise besitzt ein Pixel eines CMOS-Bildsensors daher nur einen einfachen Transistor, der als Source-Folger geschaltet ist. Dieser ist lediglich dazu in der Lage, das jeweilige Pixelsignal auf die jeweilige Spaltenleitung zu treiben (Stromverstärkung). Eine Spannungsverstärkung ist damit aber nicht möglich.

Die Spannungsverstärkung erfolgt daher meist erst in der vorgenannten Ausleseschaltung am Rand des Bildfelds. Hierzu befindet sich am Ende einer jeweiligen Spaltenleitung wenigstens ein Kondensator, in dem das jeweilige Ausgangssignal zwischengespeichert und anschließend - ggf. vermindert um das in einem weiteren Kondensator zwischengespeicherte vorgenannte Referenzsignal - durch einen der jeweiligen Spaltenleitung zugeordneten Spaltenverstärker verstärkt wird. Üblicherweise ist jeder Spaltenleitung ein eigener derartiger Spaltenverstärker zugeordnet.

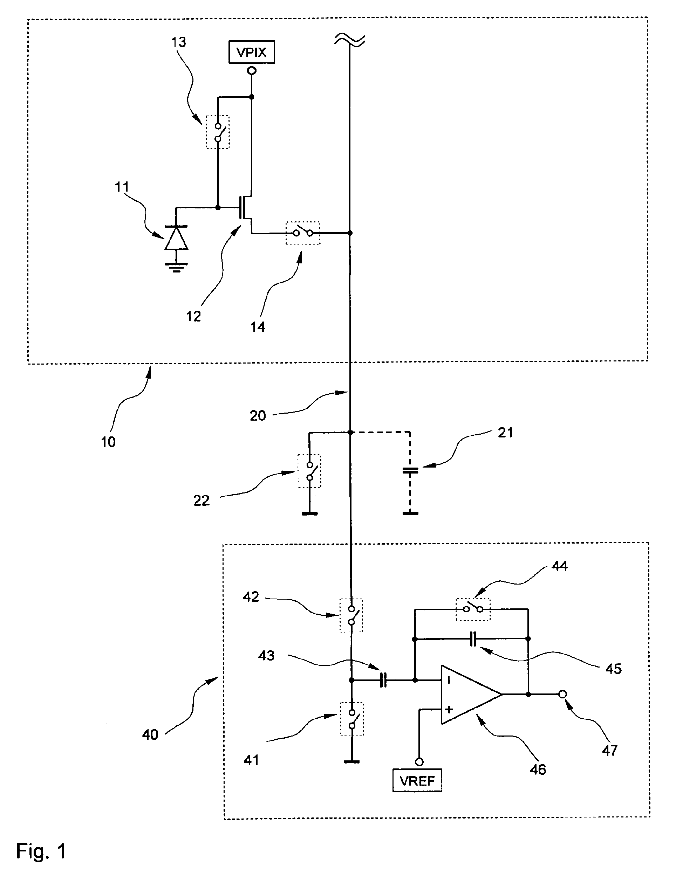

Ein Bildsensor der vorstehend erläuterten Art kann beispielsweise wie in Fig. 1 dargestellt aufgebaut sein, in der stellvertretend lediglich ein einziges Pixel 10 gezeigt ist.

Das dargestellte Pixel 10 umfasst eine lichtempfindliche Diode 11, die über einen Schalter 13 (Reset-Transistor) mit einer Versorgungsspannung VPIX gekoppelt ist. Der zwischen der Diode 11 und dem Schalter 13 gebildete Knoten ist mit dem Gate eines als Source-Folger (Source-Follower) geschalteten Transistors 12 verbunden. Das Drain des Transistors 12 ist mit der Versorgungsspannung VPIX verbunden. Die Source des Transistors 12 ist über einen Schalter 14 (Select-Transistor) mit einer dem Pixel 10 zugeordneten Spaltenleitung 20 verbunden, die in der Regel durch das gesamte Bildfeld - oder das halbe Bildfeld, sofern das Bildfeld nach "oben" und nach "unten" hin ausgelesen wird - hindurch verläuft. Die Spaltenleitung 20 ist dafür vorgesehen, die in der zugehörigen Spalte angeordneten Pixel, insbesondere Pixel 10, mit einer der Spalte zugeordneten Spaltenverstärkerschaltung 40 zu verbinden. Darüber hinaus ist die Spaltenleitung 20 an einer Stelle, bevor sie die Spaltenverstärkerschaltung 40 erreicht, über einen Schalter 22 mit Masse verbindbar.

Die Spaltenverstärkerschaltung 40 umfasst einen Kondensator 43, dessen eine Elektrode über einen Schalter 42 mit der in Richtung des Bildfelds abgehenden Spaltenleitung 20 und über einen Schalter 41 mit Masse verbindbar ist. Die andere Elektrode des Kondensators 43 ist mit dem invertierenden Eingang eines als Spaltenverstärker 46 dienenden Operationsverstärkers verbunden. Der nicht invertierende Eingang des Spaltenverstärkers 46 ist mit einer Referenzspannung VREF verbunden. Der Ausgang 47 des Spaltenverstärkers 46 ist auf den invertierenden Eingang des Spaltenverstärkers 46 rückgekoppelt. Die Rückkopplung erfolgt über einen Rückkopplungskondensator 45, der mittels eines parallel geschalteten Schalters 44 überbrückbar ist.

Das Auslesen eines Ausgangssignals aus dem Pixel 10 des Bildsensors gemäß Fig. 1 geschieht wie folgt:
Zunächst wird der Schalter 13 kurzzeitig geschlossen, um die Diode 11 bzw. den Knoten zwischen der Diode 11 und dem Schalter 13 auf die Versorgungsspannung VPIX aufzuladen. Für die anschließende Belichtung wird der Schalter 44 geschlossen und alle anderen Schalter 13, 14, 22, 41, 42 werden geöffnet. Während der Belichtung wird in der Diode 11 eine der Belichtung proportionale Anzahl an Elektronen generiert, wobei die an der Diode 11 anliegende Spannung entsprechend abnimmt.

Danach wird der Schalter 22 kurzzeitig geschlossen, um die Spaltenleitung 20 auf Masse zu legen. Dies dient dazu, die Spaltenleitung 20, die eine technologiebedingte parasitäre Kapazität aufweist, zu entladen. Die parasitäre Kapazität ist durch einen gegen Masse geschalteten Kondensator 21 veranschaulicht.

Als Nächstes werden die Schalter 14, 42 geschlossen. Die Spaltenleitung 20 nimmt nun eine Spannung an, die der Differenz zwischen der an der Diode 11 anliegenden Spannung und der Gate-Source-Spannung des Transistors 12 entspricht. Diese Spannung fällt auch über dem Kondensator 43 ab bzw. wird auch in dem Kondensator 43 zwischengespeichert. Der Kondensator 43 ist demnach das Halteglied einer dem Spaltenverstärker 46 vorgeschalteten Halteschaltung.

Anschließend werden die Schalter 14, 42, 44 geöffnet, und danach wird der Schalter 41 geschlossen. Der Spaltenverstärker 46 verstärkt nun das im Kondensator 43 gespeicherte Ausgangssignal, wobei das verstärkte Signal am Ausgang 47 des Spaltenverstärkers 46 abgegriffen werden kann. Die Verstärkung des im Kondensator 43 gespeicherten Ausgangssignals, d.h. der Verstärkungsfaktor, mit dem das im Kondensator 43 gespeicherte Ausgangssignal durch den Spaltenverstärker 46 verstärkt wird, entspricht dabei zumindest im Wesentlichen dem Verhältnis der Kapazität des Kondensators 43 zu der Kapazität des Kondensators 45.

Lediglich der Einfachheit halber ist in Fig. 1 kein Referenzsignal berücksichtigt. Das Referenzsignal kann unmittelbar nach dem Laden der Diode 11 auf die Versorgungsspannung und vor der Belichtung ausgelesen werden. Referenzsignal und Ausgangssignal können nacheinander und jeweils wie vorstehend beschrieben ausgelesen, insbesondere in dem Kondensator 43 zwischengespeichert und durch den Verstärker 46 verstärkt werden. Eine Differenz zwischen den verstärkten Signalen wird dann erst in einer dem Verstärker 46 nachgeschalteten Einrichtung gebildet. Alternativ kann das Referenzsignal aber auch in einem nicht dargestellten weiteren Kondensator zwischengespeichert und an den nicht invertierenden Eingang des Spaltenverstärkers 46 angelegt werden, so dass eine Differenzbildung bereits durch den Verstärker 46 erfolgt.

In heutigen Bildsensoren besitzt der Kondensator 43 eine Kapazität von beispielsweise 0,5 pF. Die Rauschspannung (so genanntes kTC-Rauschen) eines 0,5 pF-Kondensators beträgt bei Raumtemperatur etwa 90 µV. Die flächenbezogene Kapazität eines Kondensators beträgt bei einer heutigen CMOS-Technologie ca. 1 fF/µm². Bei einer Pixelgröße von 2,5 µm × 2,5 µm besitzt der vorgenannte Kondensator 43 damit bereits eine Größe von 2,5 µm × 200 µm.

Grundsätzlich gilt, dass die Rauschspannung eines Kondensators umso kleiner ist, je größer die Kapazität des Kondensators ist. Um das vorgenannte kTC-Rauschen beispielsweise zu halbieren und damit das Signal/Rausch-Verhältnis der Ausgangssignale zu verdoppeln, müsste die Kapazität des vorgenannten Kondensators und damit dessen Flächenbedarf vervierfacht werden. Dies ist aus Gründen der Wirtschaftlichkeit, die sich in erster Linie an der Chipfläche bemisst, in der Regel nicht vertretbar.

Der Erfindung liegt die Aufgabe zugrunde, einen Bildsensor der eingangs genannten Art anzugeben, der gegenüber bekannten Bildsensoren ein besseres Signal/Rausch-Verhältnis aufweist und zugleich günstig herstellbar ist.

Diese Aufgabe wird durch einen Bildsensor mit den Merkmalen des Anspruchs 1 gelöst, und insbesondere dadurch, dass der wenigstens eine Spaltenverstärker mit den Spaltenleitungen derart zusammenwirkt, dass die Verstärkung des jeweiligen Ausgangssignals von der Kapazität der jeweiligen Spaltenleitung abhängt.

Erfindungsgemäß wurde erkannt, dass die parasitäre Kapazität der jeweiligen, ohnehin vorhandenen Spaltenleitung direkt und unmittelbar zur Verstärkung des jeweiligen Ausgangssignals verwendet werden kann, so dass auf einen separaten Kondensator, der bei bekannten Bildsensoren zwischen der jeweiligen Spaltenleitung und dem jeweiligen Spaltenverstärker angeordnet ist, verzichtet werden kann. Die Kapazität der jeweiligen Spaltenleitung selbst wird in der vorgenannten Spaltenverstärkerschaltung als verstärkungsbestimmendes Schaltungselement verwendet.

Die Spaltenleitungen heutiger großformatiger Bildsensoren besitzen eine Kapazität von ca. 5 bis 10 pF. Durch die Verwendung dieser vergleichsweise hohen Kapazitäten als aktive Elemente für die Verstärkung der Ausgangssignale kann das kTC-Rauschen des Bildsensors erheblich verringert und dabei noch Chipfläche gespart werden.

Grundsätzlich kann den Spalten eine jeweilige Halteschaltung mit Halteglied zum Zwischenspeichern des jeweiligen Ausgangssignals zugeordnet sein, wobei der Bildsensor derart ausgelegt ist, dass das in dem Halteglied gespeicherte Ausgangssignal nachfolgend verstärkt wird, und wobei das Halteglied durch die jeweilige Spaltenleitung gebildet ist.

Bevorzugt sind die Spaltenleitungen über einen jeweiligen Schalter mit dem jeweiligen Spaltenverstärker verbindbar, wobei der Bildsensor derart ausgelegt ist, dass zum Zwischenspeichern des jeweiligen Ausgangssignals der jeweilige Schalter geöffnet und/oder zum Verstärken des jeweiligen Ausgangssignals der jeweilige Schalter geschlossen wird. Durch den Schalter kann das Zwischenspeichern des jeweiligen Ausgangssignals in der Spaltenleitung von dem Verstärken des jeweiligen Ausgangssignals zeitlich getrennt werden.

Bevorzugt ist die Verstärkung umso höher, je größer die Kapazität der jeweiligen Spaltenleitung ist.

Insbesondere ist dem jeweiligen Spaltenverstärker ein jeweiliger Rückkopplungskondensator zugeordnet, wobei die Verstärkung des jeweiligen Ausgangssignals von dem Verhältnis der Kapazität der jeweiligen Spaltenleitung zu der Kapazität des jeweiligen Rückkopplungskondensators abhängt. Der insbesondere als Gegenkopplungskondensator ausgebildete Rückkopplungskondensator kann in Reihe zu der jeweiligen Spaltenleitung und/oder parallel zu dem jeweiligen Spaltenverstärker angeordnet sein.

Zur Erhöhung des Dynamikumfangs des Bildsensors kann die Verstärkung des jeweiligen Ausgangssignals in zwei voneinander getrennten Kanälen mit einem jeweiligen Verstärker erfolgen, wobei die beiden Kanäle unterschiedliche Verstärkungen aufweisen. Beide Kanäle können dann unabhängig voneinander ausgelesen und deren verstärkte Signale können miteinander kombiniert werden, wobei insgesamt ein Bild mit einem höheren Dynamikumfang entsteht. Die Kombination der verstärkten Signale der beiden Kanäle kann dabei derart erfolgen, dass bei geringer Belichtung das verstärkte Signal des Kanals mit der höheren Verstärkung, bei hoher Belichtung das verstärkte Signal des Kanals mit der geringeren Verstärkung und in einem Übergangsbereich ein aus den verstärkten Signalen der beiden Kanäle berechnetes Signal der weiteren Verwendung zugrundegelegt wird.

Hierbei ist es bevorzugt, wenn der Bildsensor derart ausgelegt ist, dass die Verstärkung in dem ersten Kanal von der Kapazität der jeweiligen Spaltenleitung abhängt und größer ist als die Verstärkung in dem zweiten Kanal, wobei die Verstärkung in dem zweiten Kanal von der Kapazität eines jeweiligen Kondensators abhängt, der zwischen der Spaltenleitung und dem Verstärker des zweiten Kanals angeordnet ist. Der die höhere Verstärkung aufweisende erste Kanal verwendet die jeweilige Spaltenleitung als Speicherkondensator für das jeweilige Ausgangssignal, wie vorstehend beschrieben ist, wohingegen der die geringere Verstärkung aufweisende zweite Kanal zum Zwischenspeichern des jeweiligen Ausgangssignals einen aus dem Stand der Technik bekannten separaten Kondensator vorsieht.

Insbesondere ist die Kapazität des genannten Kondensators des jeweiligen zweiten Kanals geringer als die Kapazität der jeweiligen Spaltenleitung. Die Kapazität der jeweiligen Spaltenleitung kann - längenabhängig - beispielsweise 5 pF betragen und für den jeweiligen Kondensator kann beispielsweise eine Größe gewählt werden, die in einer Kapazität von 1 pF resultiert.

Bevorzugt ist der genannte Kondensator des zweiten Kanals über einen jeweiligen weiteren Schalter mit der jeweiligen Spaltenleitung verbindbar, wobei der Bildsensor derart ausgelegt ist, dass zum Zwischenspeichern des jeweiligen Ausgangssignals der jeweilige weitere Schalter geschlossen und/oder zum Verstärken des jeweiligen Ausgangssignals der jeweilige weitere Schalter geöffnet wird. Durch den weiteren Schalter kann das Zwischenspeichern des jeweiligen Ausgangssignals in dem Kondensator von dem Verstärken des jeweiligen Ausgangssignals zeitlich getrennt werden.

Vorteilhafte Ausführungsformen der Erfindung sind auch in den Unteransprüchen, der Figurenbeschreibung und der Zeichnung angegeben.

Nicht beschränkende Ausführungsbeispiele der Erfindung sind in der Zeichnung dargestellt und werden nachfolgend beschrieben:
- Fig. 1: zeigt einen CMOS-Bildsensor gemäß dem Stand der Technik, wobei von dem Bildsensor lediglich ein Pixel und eine dem Pixel zugeordnete Spaltenverstärker- schaltung dargestellt ist,
- Fig. 2: zeigt einen CMOS-Bildsensor gemäß einer ersten Aus- führungsform der vorliegenden Erfindung, und
- Fig. 3: zeigt einen CMOS-Bildsensor gemäß einer zweiten Ausführungsform der vorliegenden Erfindung.

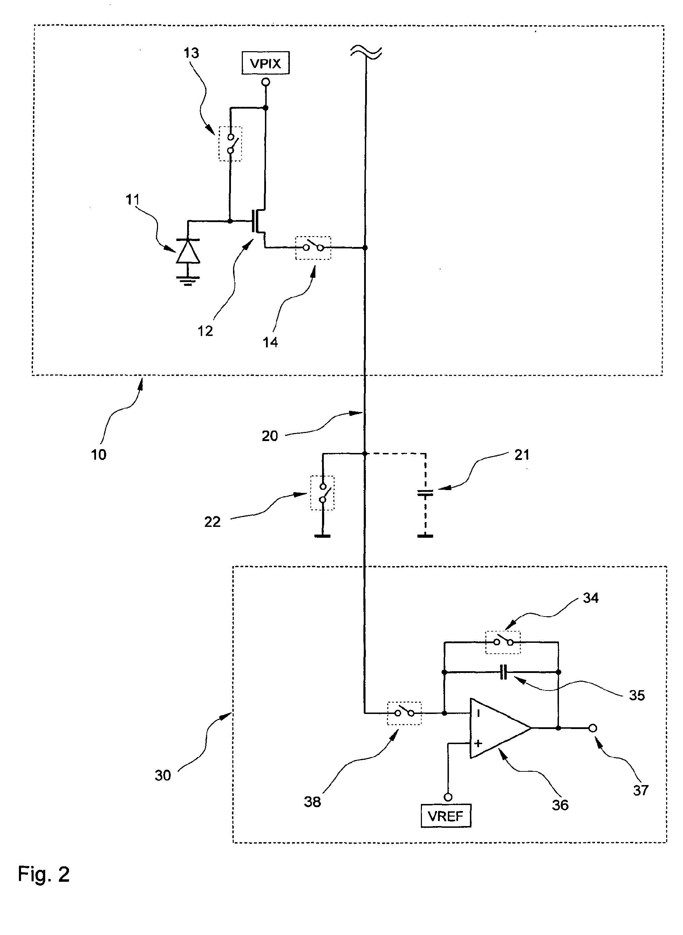

Der in Fig. 2 dargestellte erfindungsgemäße Bildsensor, bei dem es sich um einen aktiven Pixelsensor (APS) handelt, umfasst ein Pixelfeld oder Bildfeld mit einer Vielzahl von in Zeilen und Spalten angeordneten Pixeln, von denen lediglich ein Pixel 10 dargestellt ist. Jedes Pixel 10 ist wie in Fig. 1 ausgebildet. Jeder Spalte ist eine eigene Spaltenleitung 20 mit einem jeweiligen Schalter 22 zugeordnet. Jede Spaltenleitung 20 und jeder Schalter 22 ist wie in Fig. 1 ausgebildet. Jeder Spaltenleitung 20 ist eine eigene Spaltenverstärkerschaltung 30 zugeordnet. Jede Spaltenverstärkerschaltung 30 umfasst einen Spaltenverstärker 36, einen Ausgang 37, einen Rückkopplungskondensator 35 und einen Schalter 34, wie sie in Zusammenhang mit Fig. 1 beschrieben sind.

Anders als die Spaltenverstärkerschaltung 40 des Bildsensors gemäß Fig. 1 umfasst die Spaltenverstärkerschaltung 30 des Bildsensors gemäß Fig. 2 jedoch keinen eigens ausgebildeten Kondensator 43, der zwischen der in Richtung des Bildfelds abgehenden Spaltenleitung 20 und dem Spaltenverstärker 36 geschaltet ist. Darüber hinaus ist bei der Spaltenverstärkerschaltung 30 des Bildsensors gemäß Fig. 2 anstelle der beiden Schalter 41, 42 der Spaltenverstärkerschaltung 30 des Bildsensors gemäß Fig. 1 lediglich ein Schalter 38 vorgesehen, der die Spaltenleitung 20 mit dem invertierenden Eingang des Spaltenverstärkers 36 verbindet.

Das Auslesen eines Ausgangssignals aus dem Pixel 10 des Bildsensors gemäß Fig. 2 geschieht wie folgt:
Zunächst wird der Schalter 13 kurzzeitig geschlossen, um die Diode 11 bzw. den Knoten zwischen der Diode 11 und dem Schalter 13 auf die Versorgungsspannung VPIX aufzuladen. Für die anschließende Belichtung wird der Schalter 34 geschlossen und alle anderen Schalter 13, 14, 22, 38 werden geöffnet. Während der Belichtung wird in der Diode 11 eine der Belichtung proportionale Anzahl an Elektronen generiert, wobei die an der Diode 11 anliegende Spannung entsprechend abnimmt.

Danach wird der Schalter 22 kurzzeitig geschlossen, um die Spaltenleitung 20 auf Masse zu legen. Dies dient dazu, die Spaltenleitung 20, die eine technologiebedingte parasitäre Kapazität aufweist, zu entladen. Die parasitäre Kapazität ist durch einen gegen Masse geschalteten Kondensator 21 veranschaulicht.

Als nächstes wird der Schalter 14 geschlossen. Die Spaltenleitung 20 nimmt nun eine Spannung an, die der Differenz zwischen der an der Diode 11 anliegenden Spannung und der Gate-Source-Spannung des Transistors 12 entspricht. Diese Spannung wird in der als Kondensator wirkenden Spaltenleitung 20 zwischengespeichert. Die Spaltenleitung 20 ist demnach das Halteglied einer dem Spaltenverstärker 36 vorgeschalteten Halteschaltung.

Anschließend werden die Schalter 14, 34 geöffnet, und danach wird der Schalter 38 geschlossen. Der Spaltenverstärker 36 verstärkt nun das in der Spaltenleitung 20 gespeicherte Ausgangssignal, bei welchem es sich um ein Spannungssignal handelt, insbesondere um ein Spannungssignal, das bzw. dessen Wert nicht von der Kapazität der Spaltenleitung 20 abhängt, wobei das verstärkte Signal am Ausgang 37 des Spaltenverstärkers 36, der als Spannungsverstärker ausgebildet ist, abgegriffen werden kann. Die Verstärkung des in der Spaltenleitung 20 gespeicherten Ausgangssignals, d.h. der Verstärkungsfaktor, mit dem das in der Spaltenleitung 20 gespeicherte Ausgangssignal durch den Spaltenverstärker 36 verstärkt wird, entspricht dabei zumindest im Wesentlichen dem Verhältnis der Kapazität der Spaltenleitung 20 zu der Kapazität des Kondensators 35.

Die parasitäre Kapazität der Spaltenleitung 20 beträgt beispielsweise 5 pF, und die Kapazität des Kondensators 35 beispielsweise 1 pF. Somit wird beispielsweise eine Verstärkung von 5 erreicht.

Üblicherweise wird unmittelbar nach dem Laden der Diode 11 auf die Versorgungsspannung VPIX und vor der Belichtung zunächst ein Referenzsignal ausgelesen, das einem ungeladenen Pixel entspricht, um die eingangs erläuterte Differenzbildung durchzuführen. Dies kann beispielsweise nach den bereits zum Stand der Technik beschriebenen Verfahren erfolgen.

Durch die Verwendung der vergleichsweise hohen parasitären Kapazität der Spaltenleitung 20 als aktives, verstärkungsbestimmendes Element für die Verstärkung der Ausgangssignale kann das kTC-Rauschen des Bildsensors verringert und gleichzeitig - da auf den aus dem Stand der Technik bekannten, ansonsten erforderlichen Kondensator verzichtet werden kann - Chipfläche gespart werden.

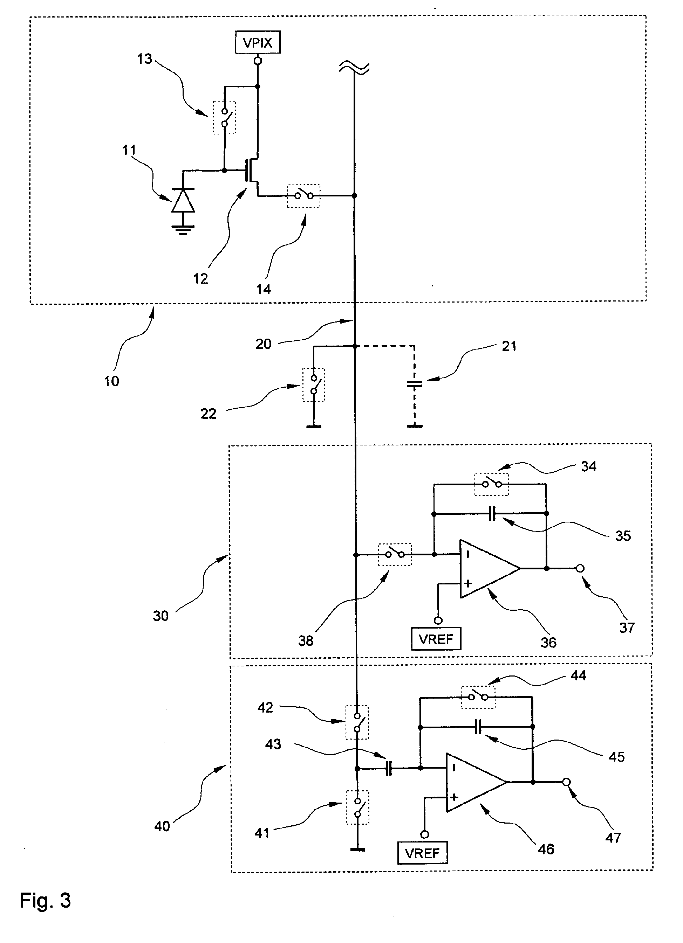

Der in Fig. 3 dargestellte erfindungsgemäße Bildsensor weist zwei voneinander getrennte Verstärkerschaltungen 30, 40 oder Kanäle auf, in denen das Ausgangssignal jeweils verstärkt wird. Die Verstärkerschaltung 30 des Bildsensors gemäß Fig. 3 (erster Kanal) entspricht der Verstärkerschaltung 30 des erfindungsgemäßen Bildsensors gemäß Fig. 2. Die Verstärkerschaltung 40 des Bildsensors gemäß Fig. 3 (zweiter Kanal) entspricht der Verstärkerschaltung 30 des aus dem Stand der Technik bekannten Bildsensors gemäß Fig. 1.

Das Auslesen eines Ausgangssignals aus dem Pixel 10 des Bildsensors gemäß Fig. 3 geschieht wie folgt:
Zunächst wird der Schalter 13 kurzzeitig geschlossen, um die Diode 11 bzw. den Knoten zwischen der Diode 11 und dem Schalter 13 auf die Versorgungsspannung VPIX aufzuladen. Für die anschließende Belichtung werden die Schalter 34, 44 geschlossen und alle anderen Schalter 13, 14, 22, 38, 41, 42 werden geöffnet. Während der Belichtung wird in der Diode 11 eine der Belichtung proportionale Anzahl an Elektronen generiert, wobei die an der Diode 11 anliegende Spannung entsprechend abnimmt.

Danach wird der Schalter 22 kurzzeitig geschlossen, um die Spaltenleitung 20 auf Masse zu legen. Dies dient dazu, die Spaltenleitung 20, die eine technologiebedingte parasitäre Kapazität aufweist, zu entladen. Die parasitäre Kapazität ist durch einen gegen Masse geschalteten Kondensator 21 veranschaulicht.

Als Nächstes werden die Schalter 14, 42 geschlossen. Die Spaltenleitung 20 nimmt nun eine Spannung an, die der Differenz zwischen der an der Diode 11 anliegenden Spannung und der Gate-Source-Spannung des Transistors 12 entspricht. Diese Spannung fällt auch über dem Kondensator 43 ab bzw. wird auch in dem Kondensator 43 zwischengespeichert. Die Spaltenleitung 20 ist demnach das Halteglied einer dem Spaltenverstärker 36 des ersten Kanals vorgeschalteten Halteschaltung. Der Kondensator 43 ist demnach das Halteglied einer dem Spaltenverstärker 46 des zweiten Kanals vorgeschalteten Halteschaltung.

Anschließend werden die Schalter 14, 42, 34, 44 geöffnet, und danach werden die Schalter 38, 41 geschlossen. Der Spaltenverstärker 36 verstärkt nun das in der Spaltenleitung 20 gespeicherte Ausgangssignal. Der Spaltenverstärker 46 verstärkt das im Kondensator 43 gespeicherte Ausgangssignal. Die parasitäre Kapazität der Spaltenleitung 20 beträgt beispielsweise 5 pF, und die Kapazität des Kondensators 35 beispielsweise 1 pF. Somit wird in dem ersten Kanal 30 beispielsweise eine Verstärkung von 5 erreicht. Die Kapazitäten der Kondensatoren 43 und 45 betragen beispielsweise jeweils 1 pF. Somit wird in dem zweiten Kanal 40 beispielsweise eine Verstärkung von 1 erreicht.

Durch die Verwendung der beiden Kanäle 30, 40 kann daher sowohl eine hohe Empfindlichkeit (durch den ersten Kanal mit hoher Verstärkung und geringem kTC-Rauschen bei geringer Belichtung) als auch eine hohe Aussteuerung (durch den zweiten Kanal mit geringerer Verstärkung bei hoher Belichtung) erreicht werden.

Zu den vorstehend erläuterten Ausführungsbeispielen ist noch anzumerken, dass das jeweilige Pixel 10 auch einen anderen Aufbau besitzen kann, um belichtungsproportionale Ausgangssignale zu erzeugen. Insbesondere können anstelle der gezeigten drei Transistoren 12, 13, 14 vier Transistoren oder eine andere Anzahl vorgesehen sein.

### Bezugszeichenliste

- 10: Pixel
- 11: Diode
- 12: Transistor
- 13: Schalter
- 14: Schalter
- 20: Spaltenleitung
- 21: Spaltenleitung als Kondensator
- 22: Schalter
- 30: Spaltenverstärkerschaltung
- 34: Schalter
- 35: Rückkopplungskondensator
- 36: Spaltenverstärker
- 37: Ausgang
- 38: Schalter
- 40: Spaltenverstärkerschaltung
- 41: Schalter
- 42: Schalter
- 43: Kondensator
- 44: Schalter
- 45: Rückkopplungskondensator
- 46: Spaltenverstärker
- 47: Ausgang

## Patentansprüche

1. Bildsensor, insbesondere CMOS-Bildsensor, mit einer Vielzahl von in Zeilen und Spalten angeordneten lichtempfindlichen Pixeln (10) zur Erzeugung belichtungsproportionaler Ausgangssignale, wobei den Spalten Spaltenleitungen (20) zugeordnet sind, um die Ausgangssignale zur Verstärkung wenigstens einem Spaltenverstärker (36) zuzuführen,
**dadurch gekennzeichnet,**
**dass** der wenigstens eine Spaltenverstärker (36) mit den Spaltenleitungen (20) derart zusammenwirkt, dass die Verstärkung des jeweiligen Ausgangssignals von der Kapazität der jeweiligen Spaltenleitung (20) abhängt.

2. Bildsensor nach Anspruch 1,
wobei den Spalten eine jeweilige Halteschaltung (20, 22, 38) mit Halteglied (20) zum Zwischenspeichern des jeweiligen Ausgangssignals zugeordnet ist, wobei der Bildsensor derart ausgelegt ist, dass das in dem Halteglied gespeicherte Ausgangssignal nachfolgend verstärkt wird, und wobei das Halteglied (20) durch die jeweilige Spaltenleitung (20) gebildet ist.

3. Bildsensor nach Anspruch 1 oder 2,
wobei die Spaltenleitungen (20) über einen jeweiligen Schalter (38) mit dem jeweiligen Spaltenverstärker (36) verbindbar sind, wobei der Bildsensor derart ausgelegt ist, dass zum Zwischenspeichern des jeweiligen Ausgangssignals der jeweilige Schalter (38) geöffnet und/oder zum Verstärken des jeweiligen Ausgangssignals der jeweilige Schalter (38) geschlossen wird.

4. Bildsensor nach zumindest einem der vorstehenden Ansprüche, wobei die Verstärkung umso höher ist, je größer die Kapazität der jeweiligen Spaltenleitung (20) ist.

5. Bildsensor nach zumindest einem der vorstehenden Ansprüche, wobei dem jeweiligen Spaltenverstärker (36) ein jeweiliger Rückkopplungskondensator (35) zugeordnet ist, und wobei die Verstärkung des jeweiligen Ausgangsignals von dem Verhältnis der Kapazität der jeweiligen Spaltenleitung (20) zu der Kapazität des jeweiligen Rückkopplungskondensators (35) abhängt.

6. Bildsensor nach Anspruch 5,
wobei der Rückkopplungskondensator (35) in Reihe zu der jeweiligen Spaltenleitung (20) und/oder parallel zu dem jeweiligen Spaltenverstärker (36) angeordnet ist.

7. Bildsensor nach zumindest einem der vorstehenden Ansprüche, wobei die Verstärkung des jeweiligen Ausgangssignals in zwei voneinander getrennten Kanälen (30, 40) mit einem jeweiligen Verstärker (36, 46) erfolgt, und wobei die beiden Kanäle (30, 40) unterschiedliche Verstärkungen aufweisen.

8. Bildsensor nach Anspruch 7,
wobei der Bildsensor derart ausgelegt ist, dass die Verstärkung in dem ersten Kanal (30) von der Kapazität der jeweiligen Spaltenleitung (20) abhängt und größer ist als die Verstärkung in dem zweiten Kanal (40), wobei die Verstärkung in dem zweiten Kanal (40) von der Kapazität eines jeweiligen Kondensators (43) abhängt, der zwischen der jeweiligen Spaltenleitung (20) und dem jeweiligen Verstärker (46) des zweiten Kanals (40) angeordnet ist.

9. Bildsensor nach Anspruch 8,
wobei die Kapazität des jeweiligen Kondensators (43) des zweiten Kanals (40) geringer ist als die Kapazität der jeweiligen Spaltenleitung (20).

10. Bildsensor nach Anspruch 8 oder 9,
**dadurch gekennzeichnet,**
wobei der jeweilige Kondensator (43) des zweiten Kanals (40) über einen jeweiligen weiteren Schalter (42) mit der jeweiligen Spaltenleitung (20) verbindbar ist, und wobei der Bildsensor derart ausgelegt ist, dass zum Zwischenspeichern des jeweiligen Ausgangssignals der jeweilige weitere Schalter (42) geschlossen und/oder zum Verstärken des jeweiligen Ausgangssignals der jeweilige weitere Schalter (42) geöffnet wird.
